# EUROPÄISCHE PATENTSCHRIFT

(11) **EP 2 131 047 B1**
(45) Veröffentlichungstag und Bekanntmachung des Hinweises auf die Patenterteilung: **07.05.2014**
(21) Anmeldenummer: 09009762.7
(22) Anmeldetag: 04.08.2006
(51) Int. Cl.: F16B 35/04, F16B 25/10, E05D 5/02

(54) **Verbindungselement zum Anbringen eines Beschlagteils an einem Flügel oder einem Blendrahmen eines Fensters, einer Tür oder dergleichen**
Connection element for attaching a fitting part to a leaf or a blind frame of a window, door or similar
Elément de raccordement destiné à l'application d'une pièce d'armature sur une aile ou un dormant de fenêtre, de porte ou analogue

(43) Veröffentlichungstag der Anmeldung: 09.12.2009
(62) Teilanmeldung aus: 06016313.6
(73) Patentinhaber: ROTO FRANK AG, 70771 Leinfelden-Echterdingen (DE)
(72) Erfinder: Zaccaria, Giovanni, 70771 Leinfelden-Echterdingen (DE)
(74) Vertreter: Kohler Schmid Möbus

(56) Entgegenhaltungen:
- EP-A- 1 180 606
- EP-A1- 0 307 119

## Beschreibung

Die Erfindung betrifft ein Verbindungselement zum Anbringen eines Beschlagteils an einem Flügel oder an einem Blendrahmen eines Fensters, einer Tür oder dergleichen, welches einen Schaft mit einer Schaftachse aufweist und welches unter Drehen des Schaftes um die Schaftachse in einer in Längsrichtung der Schaftachse verlaufenden Montagerichtung aus einer Außerfunktionsstellung in eine Montagestellung bewegbar ist,
- wobei der Schaft an der in Montagerichtung gelegenen Seite einen selbstschneidenden axialen Schaftabschnitt aufweist, auf den in Gegenrichtung der Montagerichtung ein axialer Passungsabschnitt des Schaftes folgt, der seinerseits einen Durchmesser besitzt, der mit dem Durchmesser des selbstschneidenden axialen Schaftabschnittes übereinstimmt oder der größer ist als dieser Durchmesser,
- wobei an der von dem selbstschneidenden axialen Schaftabschnitt abliegenden Seite des axialen Passungsabschnittes des Schaftes ein axialer Gewindeabschnitt des Schaftes vorgesehen ist, welcher ein Außengewinde aufweist, dessen Gewinde-Außendurchmesser größer ist als der Durchmesser des axialen Passungsabschnittes des Schaftes und
- wobei an der dem selbstschneidenden axialen Schaftabschnitt zugewandten Seite des axialen Passungsabschnittes des Schaftes ein axialer Übergangsabschnitt des Schaftes vorgesehen ist, der sich in Gegenrichtung der Montagerichtung des Verbindungselementes stetig bis maximal auf den Durchmesser des axialen Passungsabschnittes des Schaftes erweitert,

Gattungsgemäßer Stand der Technik ist in der EP 0 307 119 A1 offenbart. Aus dieser Druckschrift ist eine Schraube bekannt, die an dem einem Schraubenkopf gegenüberliegenden Ende eine Bohrspitze aufweist, an die ein selbstschneidendes Gewinde angrenzt. Der Durchmesser des selbstschneidenden Gewindes ist größer als der Durchmesser der Bohrspitze.

Die bekannte Schraube wird dazu verwendet, gewelltes Blech mit metallischen Dachrahmen zu verschrauben. Durch Drehen der Schraube um ihre Schaftachse in Verbindung mit Druck in eine Montagerichtung erzeugt die Bohrspitze ein Bohrloch in dem gewellten Blech. Das selbstschneidende Gewinde schneidet anschließend ein Gewinde in dasselbe Bohrloch. Ein Übergangsabschnitt weitet das geschnittene Gewinde auf, sodass ein weiterer Gewindeabschnitt ein zweites, im Durchmesser gröβeres Gewinde schneiden kann. Auch in dem Dachrahmen erzeugt die Bohrspitze durch Drehen des Verbindungselements um seine Schaftachse ein Bohrloch. In dieses schneidet das selbstschneidende Gewinde anschließend ein Gewinde. Durch weiteres Drehen der Schraube um ihre Schaftachse, werden das gewellte Blech durch den eingeschraubten Gewindeabschnitt und der metallische Dachrahmen durch das verschraubte selbstschneidende Gewinde relativ zueinander fixiert.

Weiterer gattungsgemäßer Stand der Technik ist bekannt aus EP 1 180 606 A1. Diese Druckschrift offenbart ein Verbindungselement mit einer Bohrspitze an dem einen und einem radial erweiterten Kopf an dem anderen Ende eines Schaftes. Auf die Bohrspitze folgt zu dem radial erweiterten Kopf hin ein axialer Zwischenabschnitt mit einem selbstschneidenden Gewinde. Mit dem selbstschneidenden Gewinde des axialen Zwischenabschnittes schneidet sich das Verbindungselement an einem Metallprofil in die Wand einer Bohrung ein, die zuvor von der Bohrspitze erstellt worden ist. Ein Einschneiden des axialen Zwischenabschnittes in die Wand der Bohrung an dem Metallprofil ist nur unter der Voraussetzung möglich, dass der Durchmesser des axialen Zwischenabschnittes den Durchmesser der Bohrung an dem Metallprofil und somit den Durchmesser der diese Bohrung erstellenden Bohrspitze übersteigt.

Das Einschneiden gattungsgemäßer Verbindungselemente zu erleichtern, ist Aufgabe der vorliegenden Erfindung.

Erfindungsgemäß gelöst wird diese Aufgabe durch die Merkmale des unabhängigen Patentanspruchs 1.

Gegenstand von Patentanspruch 1 ist ein zum Anbringen eines Beschlagteils an einem Flügel oder einem Blendrahmen eines Fensters, einer Tür oder dergleichen verwendbares Verbindungselement, dessen Schaft zusätzlich zu einem selbstschneidenden Abschnitt sowie einem Passungsabschnitt einen Gewindeabschnitt aufweist. Bei der Beschlagteilmontage erstellt der selbstschneidende Schaftabschnitt an dem betreffenden Flügel oder an dem betreffenden Blendrahmen eine Aufnahme für den Passungsabschnitt des Schaftes. Aufgrund der im Falle der Erfindung vorgesehenen Bemessung des Durchmessers des selbstschneidenden Schaftabschnittes einerseits und des Passungsabschnittes des Schaftes andererseits kann das Verbindungselement im montierten Zustand in Querrichtung seiner Schaftachse spielfrei in diejenige Aufnahme an dem Flügel oder dem Blendrahmen eingreifen, die zuvor mittels des selbstschneidenden Schaftabschnittes erstellt worden ist. Eine in Querrichtung der Schaftachse gleichermaßen spielfreie Verbindung lässt sich über den axialen Gewindeabschnitt an dem Schaft des Verbindungselementes zwischen diesem und dem an dem Flügel oder dem Blendrahmen anzubringenden Beschlagteil herstellen. Die letztgenannte Verbindung ist der Einfachheit halber als Schraubverbindung ausgeführt. Im Zusammenspiel bewirken die in Querrichtung der Schaftachse des Verbindungselementes spielfreie Abstützung des Verbindungselementes an dem Flügel oder dem Blendrahmen und die ebenfalls in Querrichtung der Schaftachse des Verbindungselementes spielfreie Abstützung des Beschlagteils an dem Verbindungselement eine in der genannten Richtung wirksame, spielfreie Lagerung des Beschlagteils an dem Flügel oder dem Blendrahmen.

Wird das zu montierende Beschlagteil bereits vor dem Einbringen des Verbindungselementes an dem betreffenden Flügel oder Blendrahmen angeordnet, so kann das Verbindungselement mit seinem selbstschneidenden Schaftabschnitt durch einen Durchtritt an dem Beschlagteil hindurch an dem Flügel oder dem Blendrahmen angesetzt werden. Dabei sorgt der durchmesserreduzierte Zwischenabschnitt an dem Schaft des Verbindungselementes dafür, dass der axiale Gewindeabschnitt des Schaftes in Montagerichtung des Verbindungselementes gesehen, auch bei geringer axialer Länge des selbstschneidenden Schaftabschnittes vor dem mit einem zugeordneten Innengewinde versehenen Durchtritt des Beschlagteils angeordnet ist, wenn der selbstschneidende Schaftabschnitt durch das Beschlagteil hindurch an dem Flügel oder dem Blendrahmen zur Anlage gebracht ist. Infolge der Durchmesserreduzierung des Zwischenabschnittes des Schaftes gegenüber dem selbstschneidenden axialen Schaftabschnitt ist die achsparallele Wand des Zwischenabschnittes an dem Schaft des Verbindungselementes von der Wand der mittels des selbstschneidenden Schaftabschnittes erstellten Aufnahme an dem Flügel oder dem Blendrahmen beabstandet. Beim Einschneiden des Verbindungselementes in den Flügel oder den Blendrahmen tritt daher keine das Einschneiden erschwerende Reibung zwischen dem axialen Zwischenabschnitt an dem Schaft des Verbindungselementes und der diesem gegenüberliegenden Wand der Aufnahme an dem Flügel oder dem Blendrahmen auf. Schneidet sich das Verbindungselement in ein Hohlprofil des betreffenden Flügels oder des betreffenden Blendrahmens ein, so wird aufgrund der Durchmesserreduzierung des axialen Zwischenabschnittes des Schaftes gegenüber dem selbstschneidenden Schaftabschnitt das Durchdringen der Wand des Hohlprofils mit dem selbstschneidenden Schaftabschnitt für den Monteur spürbar. Hat der selbstschneidende Schaftabschnitt des Verbindungselementes die betreffende Hohlprofilwand durchdrungen, so bewegt sich das in Montagerichtung druckbeaufschlagte Verbindungselement schlagartig in Montagerichtung. Für den Monteur wird dadurch der Zeitpunkt erkennbar, zu welchem er die zum Einschneiden erforderliche Druckbeaufschlagung des Verbindungselementes in Montagerichtung reduzieren kann. Aufgrund der mit der Durchmesserreduzierung gegenüber dem selbstschneidenden Schaftabschnitt verbundenen Durchmesserreduzierung des Zwischenabschnittes an dem Schaft des Verbindungselementes gegenüber der Wand der mittels des selbstschneidenden Schaftabschnittes erstellten Aufnahme kann das Verbindungselement die Aufnahme mit dem axialen Zwischenabschnitt des Schaftes ohne Kontakt mit der Wand der Aufnahme und folglich mit verhältnismäßig großer Geschwindigkeit in Montagerichtung passieren. Dadurch kann unter Umständen das Eintreiben des auf den durchmesserreduzierten Zwischenabschnitt entgegen der Montagerichtung folgenden Passungsabschnittes des Schaftes an dem Verbindungselement in die mittels des selbstschneidenden Schaftabschnittes erstellte Aufnahme an dem Flügel oder dem Blendrahmen erleichtert werden.

Der Übergangsabschnitt, der an dem Schaft des Verbindungselementes zwischen dem durchmesserreduzierten Zwischenabschnitt und dem Passungsabschnitt vorgesehen ist, sorgt für eine selbsttätige Zentrierung des Passungsabschnittes an dem Schaft des Verbindungselementes gegenüber der zugeordneten, mittels des selbstschneidenden Schaftabschnittes erstellten Aufnahme an dem Flügel oder dem Blendrahmen.

Besondere Ausführungsarten der Anordnung nach dem unabhängigen Patentanspruch 1 ergeben sich aus den abhängigen Patentansprüchen 2 und 3.

Im Falle der Erfindungsbauart nach Patentanspruch 2 ist der Passungsabschnitt an dem Schaft des Verbindungselementes glattwandig ausgebildet. Auch dadurch vereinfacht sich das Eintreiben des Passungsabschnittes an dem Verbindungselement in die zugeordnete Aufnahme an dem Flügel oder dem Blendrahmen. Gleichzeitig lässt sich ein glattwandiger Passungsabschnitt mit einem geringen fertigungstechnischen Aufwand herstellen.

Eine entgegen der Montagerichtung auf den Gewindeabschnitt des Schaftes folgende und den Gewindeabschnitt des Schaftes seitlich überragende Auflage des Verbindungselementes, wie sie ausweislich Patentanspruch 3 in weiterer bevorzugter Ausgestaltung der Erfindung vorgesehen ist, gestattet es, das Verbindungselement und das zu montierende Beschlagteil durch Eindrehen des Verbindungselementes in das Beschlagteil gegeneinander zu verspannen. Durch ein derartiges Verspannen wird eine besonders wirksame, in Querrichtung der Schaftachse des Verbindungselementes spielfreie Verbindung zwischen dem Verbindungselement und dem Beschlagteil ermöglicht.

Besitzt der Passungsabschnitt an dem Schaft des Verbindungselementes ein Durchmesser-Übermaß gegenüber dem selbstschneidenden Schaftabschnitt des Verbindungselementes, so resultiert daraus ein entsprechendes Durchmesser-Übermaß zwischen dem Passungsabschnitt an dem Schaft des Verbindungselementes einerseits und der mittels des selbstschneidenden Schaftabschnittes erstellten Aufnahme an dem Flügel oder dem Blendrahmen andererseits. Zwischen dem in der Montagestellung befindlichen Verbindungselement und dem Flügel bzw. dem Blendrahmen ergibt sich in diesem Fall eine Presspassung. Die Verbindung zwischen dem Verbindungselement und dem Flügel bzw. dem Blendrahmen und damit auch die Verbindung zwischen dem Beschlagteil und dem Flügel bzw. dem Blendrahmen ist folglich auch entgegen der Montagerichtung des Verbindungselementes lastaufnahmefähig.

Nachfolgend wird die Erfindung anhand beispielhafter schematischer Darstellungen näher erläutert. Es zeigen:
- Fig. 1: den ecklagerseitigen Bereich des Blendrahmens eines Dreh-/ Kippfensters unter anderem mit einem Widerlagerbock einer Beschlag-Verstelleinrichtung und einem in einer Außerfunktionsstellung befindlichen Verbindungselement und
- Fign. 2 bis 5: Schnittdarstellungen der Anordnung gemäß Fig. 1 in unterschiedlichen Montagephase.

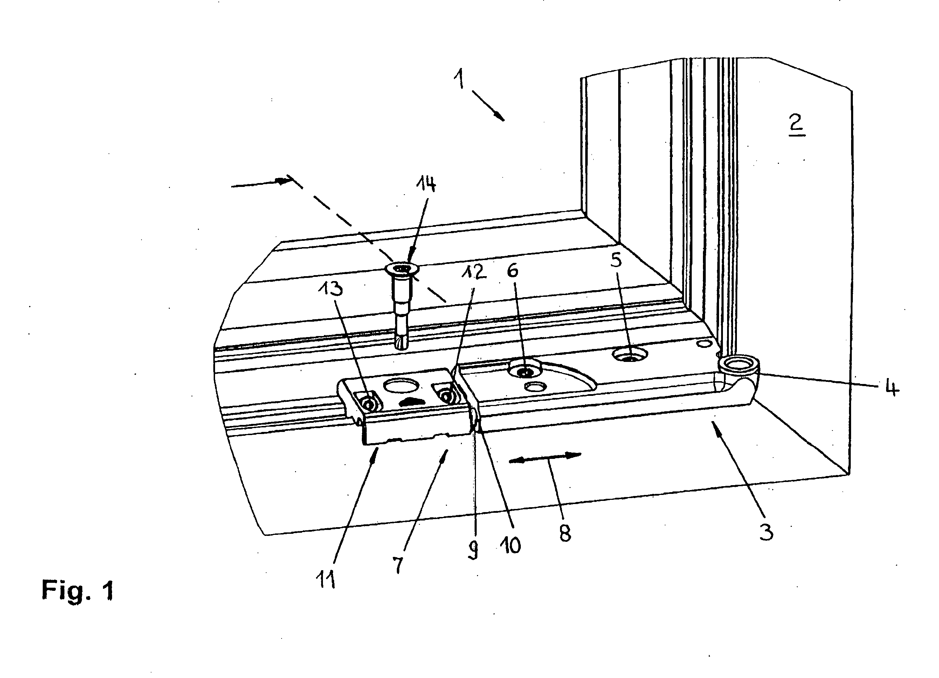

Gemäß Fig. 1 umfasst ein Fenster 1 eine Blendrahmenanordnung mit einem Blendrahmen 2. Ein dem Blendrahmen 2 zugeordneter Flügel des Fensters 1 ist der Einfachheit halber nicht dargestellt. An dem Blendrahmen 2 ist der Flügel im Bereich seiner unteren bandseitigen Ecke über ein Ecklager 3 abgestützt. Das Ecklager 3 weist ein Auflager 4 auf, in welches bei montiertem Flügel ein an dem Flügel angebrachter Lagerbolzen eingreift. Über das Auflager 4 des Ecklagers 3 und den flügelseitigen Lagerbolzen ist der Flügel an dem Blendrahmen 2 in üblicher Weise um eine vertikale Achse drehbar sowie um eine horizontale Achse kippbar gelagert. Insofern bildet das Ecklager 3 einen Funktionsbeschlag des Fensters 1.

Mit dem Blendrahmen 2 ist das Ecklager 3 über zwei Verbindungsschrauben 5, 6 verschraubt. Eine Verstelleinrichtung 7 dient zur Justage des Ecklagers 3 in Richtung eines Doppelpfeils 8.

Teil der Verstelleinrichtung 7 ist eine in Fig. 1 andeutungsweise erkennbare Stellschraube 9, die einerseits in eine Gewindebohrung 10 des Ecklagers 3 eingreift und andererseits an einem Beschlagteil in Form eines Widerlagerbockes 11 der Verstelleinrichtung 7 drehbar aber in axialer Richtung unverschiebbar abgestützt ist.

In der Montagephase gemäß Fig. 1 ist das Ecklager 3 über die Verbindungsschrauben 5, 6 an dem Blendrahmen 2 fixiert. Der Widerlagerbock 11 der Verstelleinrichtung 7 ist mit Hilfe von Befestigungsmitteln in Form von Befestigungsschrauben 12, 13 an dem Blendrahmen 2 vormontiert. In Richtung des Doppelpfeils 8 nimmt der Widerlagerbock 11 seine endgültige Stellung ein. Ein zusätzlich zu den Befestigungsschrauben 12, 13 vorgesehenes Verbindungselement 14 zum Anbringen des Widerlagerbocks 11 an dem Blendrahmen 2 befindet sich in einer Außerfunktionsstellung.

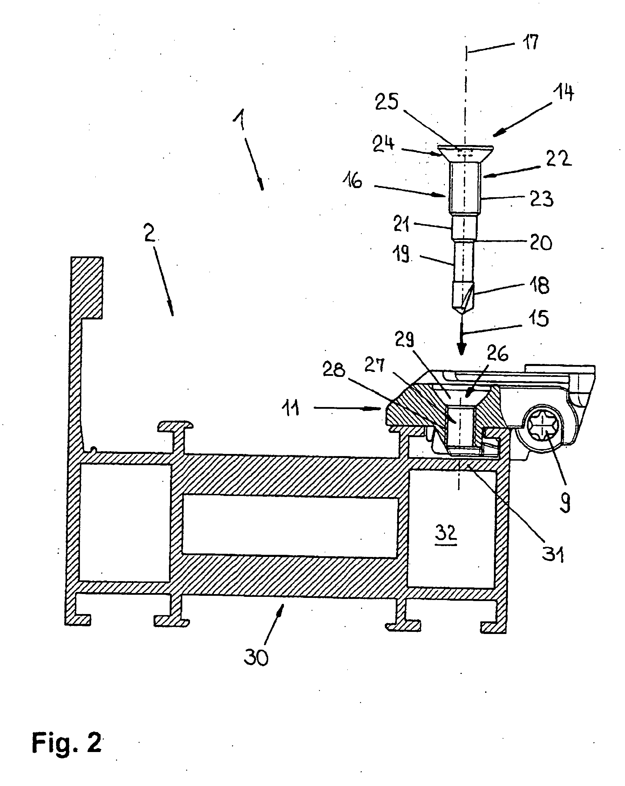

Fig.2 zeigt die Anordnung gemäß Fig. 1 in einem Schnitt entlang einer Schnittebene, deren Verlauf in Fig. 1 gestrichelt angedeutet ist.

Ein Pfeil 15 veranschaulicht in Fig. 2 die Montagerichtung des Verbindungselementes 14. Das Verbindungselement 14 selbst umfasst einen Schaft 16 mit einer Schaftachse 17, die ihrerseits parallel zu der Montagerichtung 15 des Verbindungselementes 14 verläuft. An dem in Montagerichtung 15 gelegenen Ende weist der Schaft 16 des Verbindungselementes 14 einen als Bohrspitze 18 ausgeführten selbstschneidenden axialen Schaftabschnitt auf. An diesen schließt sich entgegen der Montagerichtung 15 ein Zwischenabschnitt 19 des Schaftes 16 an. Der Zwischenabschnitt 19 des Schaftes 16 besitzt zylindrische Gestalt und ist gegenüber der Bohrspitze 18 bzw. gegenüber deren Hüllkreis durchmesserreduziert. Ein axialer Übergangsabschnitt 20 des Schaftes 16 bildet den Übergang zwischen dem Zwischenabschnitt 19 und einem axialen Passungsabschnitt 21 des Schaftes 16. Der axiale Übergangsabschnitt 20 besitzt die Form eines Kegelstumpfes und erweitert sich von dem Durchmesser des Zwischenabschnittes 19 auf den Durchmesser des Passungsabschnittes 21 des Schaftes 16. Der Passungsabschnitt 21 besitzt ebenso wie der Zwischenabschnitt 19 des Schaftes 16 Zylinderform. Seine achsparallele Mantelfläche ist glatt. Der Durchmesser des Passungsabschnittes 21 ist geringfügig größer als der Durchmesser der Bohrspitze 18 des Schaftes 16.

Auf den Passungsabschnitt 21 folgt in Gegenrichtung der Montagerichtung 15 ein axialer Gewindeabschnitt 22 des Schaftes 16. Der Gewindeabschnitt 22 ist mit einem Außengewinde 23 versehen, dessen Gewinde-Außendurchmesser den Durchmesser des Passungsabschnittes 21 übersteigt. An dem entgegen der Montagerichtung 15 gelegenen Ende wird der Schaft 16 des Verbindungselementes 14 von einem Kopf, im Einzelnen von einem Senkkopf 24 des Verbindungselementes 14 in radialer Richtung überragt. Der Senkkopf 24 weist einen herkömmlichen Innensechskant 25 als Eingriff für ein Montagewerkzeug auf.

An dem Widerlagerbock 11 der Verstelleinrichtung 7 zeigt Fig. 2 einen Beschlagteildurchtritt 26, welcher den Widerlagerbock 11 in Montagerichtung 15 des Verbindungselementes 14 durchdringt. Blendrahmenseitig umfasst der Beschlagteildurchtritt 26 eine zylindrische Gewindebohrung 27 mit einem Innengewinde 28. An der dem Blendrahmen 2 gegenüberliegenden Seite setzt sich die Gewindebohrung 27 in einer Einsenkung 29 des Beschlagteildurchtrittes 26 fort.

Das Innengewinde 28 an dem Widerlagerbock 11 und das Außengewinde 23 an dem Verbindungselement 14 sind einander zugeordnet und dementsprechend aufeinander abgestimmt ausgeführt. Der Gewinde-Innendurchmesser des Innengewindes 28 an dem Widerlagerbock 11 ist größer als der Durchmesser des Passungsabschnittes 21 an dem Schaft 16 des Verbindungselementes 14.

Im Übrigen ist aus Fig. 2 ersichtlich, dass der mit dem Ecklager 3 und dem Widerlagerbock 11 versehene Holm des Blendrahmens 2 von einem Blendrahmen-Hohlprofil 30 gebildet wird. Der Widerlagerbock 11 ist nahe einer Profilwand 31 an einer Beschlagteilnut angeordnet. Die Profilwand 31 begrenzt einen Hohlraum 32 des Blendrahmen-Hohlprofils 30.

Die Abläufe beim Einbringen des Verbindungselementes 14 ergeben sich mit ihrer chronologischen Abfolge aus den Fign. 2 bis 5.

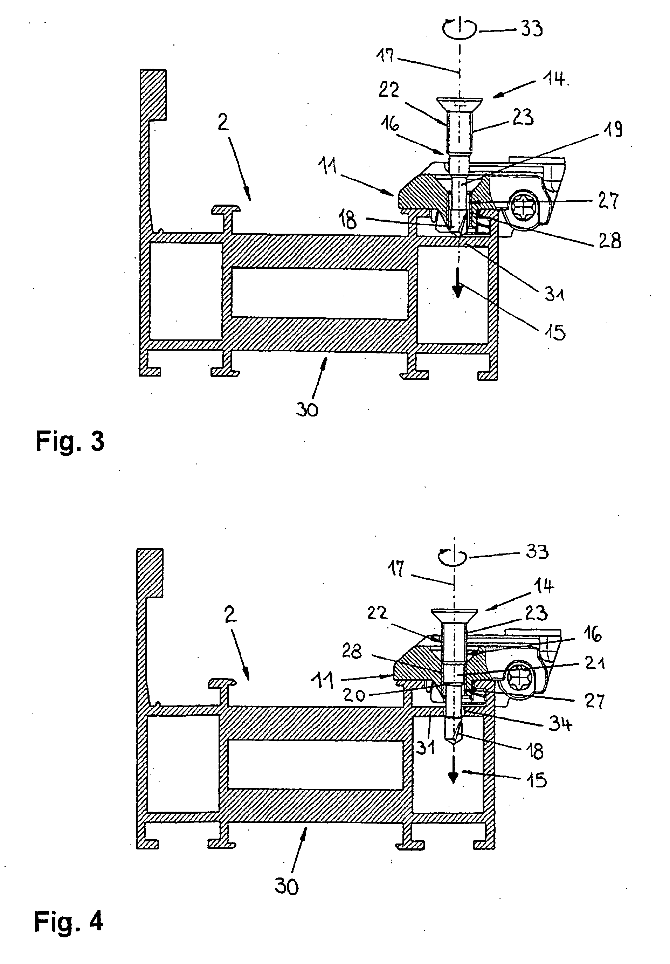

Ausgehend von seiner Außerfunktionsstellung gemäß Fig. 2 wird das Verbindungselement 14 in der aus Fig. 3 ersichtlichen Weise durch den vormontierten Widerlagerbock 11 hindurch an dem Blendrahmen 2 angesetzt. Mit der Bohrspitze 18 beaufschlagt das Verbindungselement 14 die Profilwand 31 des Blendrahmen-Hohlprofils 30. Dabei sind die Bohrspitze 18 und der Zwischenabschnitt 19 an dem Schaft 16 des Verbindungselementes 14 jeweils zum Teil im Inneren der Gewindebohrung 27 an dem Widerlagerbock 11 angeordnet. Im Übrigen kommt das Verbindungselement 14 außerhalb der Gewindebohrung 27 des Widerlagerbockes 11 zu liegen.

Mittels eines herkömmlichen Schraubers wird nun das Verbindungselement 14 in einer Drehrichtung 33 um die Schaftachse 17 gedreht. Infolge dieser Drehbewegung schneidet sich die Bohrspitze 18 des Verbindungselementes 14 in die Profilwand 31 des Blendrahmen-Hohlprofils 30 ein. Dabei wird an der Profilwand 31 des Blendrahmen-Hohlprofils 30 eine Passungsaufnahme 34 erbohrt (Fig. 4), deren Durchmesser dem Durchmesser der Bohrspitze 18 des Verbindungselementes 14 entspricht. Mit dem Einschneiden der Bohrspitze 18 in den Blendrahmen 2 bewegt sich das Verbindungselement 14 in Montagerichtung 15. Das Außengewinde 23 an dem axialen Gewindeabschnitt 22 ist zunächst noch in Richtung der Schaftachse 17 von dem Innengewinde 28 an dem Widerlagerbock 11 beabstandet.

Sobald die Bohrspitze 18 an dem Verbindungselement 14 die Profilwand 31 des Blendrahmen-Hohlprofils 30 mit ihrem in Montagerichtung 15 voreilenden Ende durchdrungen hat, bewegt sich das Verbindungselement 14 schlagartig in Montagerichtung 15. Dabei läuft der Passungsabschnitt 21 an dem Schaft 16 des Verbindungselementes 14 in die gegenüber dem Passungsabschnitt 21 erweiterte Gewindebohrung 27 an dem Widerlagerbock 11 ein.

Die schlagartige Bewegung des Verbindungselementes 14 endet, sobald der Gewindeabschnitt 22 an dem Schaft 16 des Verbindungselementes 14 mit der in Montagerichtung 15 gelegenen Anfangswindung seines Außengewindes 23 auf der zugeordneten Anfangswindung des Innengewindes 28 an dem Widerlagerbock 11 aufsetzt. Es ergeben sich damit die Verhältnisse gemäß Fig. 4.

Die axialen Längen der einzelnen Abschnitte des Schaftes 16 an dem Verbindungselement 14 sind derart aufeinander sowie auf die Gegebenheiten an dem Widerlagerbock 11 abgestimmt, dass bei Auflage des Gewindeabschnittes 22 des Verbindungselementes 14 auf dem Rand der Gewindebohrung 27 an dem Widerlagerbock 11 der Passungsabschnitt 21 an dem Schaft 16 des Verbindungselementes 14 noch außerhalb der an der Profilwand 31 des Blendrahmen-Hohlprofils 30 erstellten Passungsaufnahme 34 liegt. Außerdem ist bei dem Montagezustand gemäß Fig. 4 die axiale Länge des Gewindeabschnittes 22 an dem Schaft 16 des Verbindungselementes 14 größer als der Abstand des in Montagerichtung gelegenen Endes des Passungsabschnittes 21 an dem Verbindungselement 14 von der dem Passungsabschnitt 21 zugewandten Begrenzungsfläche der Profilwand 31 an dem Blendrahmen-Hohlprofil 30.

Infolgedessen bewirkt eine fortgesetzte Drehbewegung des Verbindungselementes 14 in Drehrichtung 33 um die Schaftachse 17 ein Eintreiben des Passungsabschnittes 21 an dem Schaft 16 des Verbindungselementes 14 in die Passungsaufnahme 34 an der Profilwand 31 des Blendrahmen-Hohlprofils 30. Erzeugt wird die betreffende Vorschubbewegung des Verbindungselementes 14 in Montagerichtung 15 mittels des Gewindeantriebes, welchen das Innengewinde 28 an dem Widerlagerbock 11 und das damit kämmende Außengewinde 23 an dem Verbindungselement 14 bilden. Die Gewindeübersetzung gestattet es, den Passungsabschnitt 21 an dem Schaft 16 des Verbindungselements 14 mit verhältnismäßig geringem Kraftaufwand in die Passungsaufnahme 34 an der Profilwand 31 des Blendrahmen-Hohlprofils 30 einzuführen.

Erleichtert wird das Einführen des Passungsabschnittes 21 in die Passungsaufnahme 34 durch den zentrierend wirkenden Übergangsabschnitt 20 an dem Schaft 16 des Verbindungselementes 14. Infolge des Durchmesser-Übermaßes des Passungsabschnittes 21 an dem Verbindungselement 14 gegenüber der Passungsaufnahme 34 an der Profilwand 31 ergibt sich zwischen dem Verbindungselement 14 und dem Blendrahmen 2 eine Presspassung.

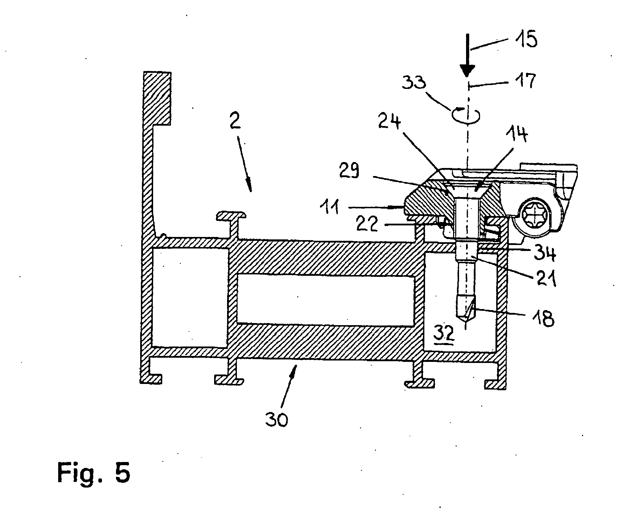

Seine endgültige Funktionsstellung hat das Verbindungselement 14 erreicht, sobald sein Senkkopf 24 auf die ihm gegenüberliegende Fläche der Einsenkung 29 an dem Widerlagerbock 11 aufgelaufen ist und das Verbindungselement 14 sowie der Widerlagerbock 11 gegeneinander verspannt sind (Fig. 5). Insbesondere zum gegenseitigen Verspannen von Verbindungselement 14 und Widerlagerbock 11 ist letzterer gegen Mitdrehen in der Drehrichtung 33 des Verbindungselementes 14 abzustützen. Für eine derartige Drehsicherung des Widerlagerbockes 11 sorgen unter anderem auch die Befestigungsschrauben 12, 13.

In dem Endmontagezustand gemäß Fig. 5 ist der Widerlagerbock 11 allseitig wirsam an dem Blendrahmen 2 fixiert. In Gegenrichtung der Montagerichtung 15 wird der Widerlagerbock 11 sowohl über die Presspassung von Verbindungselement 14 und Blendrahmen 2 als auch über die Befestigungsschrauben 12, 13 gehalten. In Querrichtung der Schaftachse 17 des Verbindungselementes 14 ist der Widerlagerbock 11 in erster Linie über die Gewindeverbindung mit dem Verbindungselement 14 und über dessen Abstützung an dem Blendrahmen 2 spielfrei gelagert. Die Befestigungsschrauben 12, 13 leisten auch in dieser Hinsicht einen Beitrag.

Alternativ zu den dargestellten Verhältnissen kann der Widerlagerbock 11 auch an einem Flügel einer Flügelanordnung zum Einsatz kommen. Die Montage erfolgt in diesem Fall analog zu der vorstehend im Einzelnen beschriebenen Montage an dem Blendrahmen 2.

## Patentansprüche

1. Verbindungselement zum Anbringen eines Beschlagteils (11) an einem Flügel oder an einem Blendrahmen (2) eines Fensters (1), einer Tür oder dergleichen, welches einen Schaft (16) mit einer Schaftachse (17) aufweist und welches unter Drehen des Schaftes (16) um die Schaftachse (17) in einer in Längsrichtung der Schaftachse (17) verlaufenden Montagerichtung (15) aus einer Außerfunktionstellung in eine Montagestellung bewegbar ist,
• wobei der Schaft (16) an der in Montagerichtung (15) gelegenen Seite einen selbstschneidenden axialen Schaftabschnitt (18) aufweist, auf den in Gegenrichtung der Montagerichtung (15) ein axialer Passungsabschnitt (21) des Schaftes (16) folgt, der seinerseits einen Durchmesser besitzt, der mit dem Durchmesser des selbstschneidenden axialen Schaftabschnittes (18) übereinstimmt oder der größer ist als dieser Durchmesser,
• wobei an der von dem selbstschneidenden axialen Schaftabschnitt (18) abliegenden Seite des axialen Passungsabschnittes (21) des Schaftes (16) ein axialer Gewindeabschnitt (22) des Schaftes (16) vorgesehen ist, welcher ein Außengewinde (23) aufweist, dessen Gewinde-Außendurchmesser größer ist als der Durchmesser des axialen Passungsabschnittes (21) des Schaftes (16) und
• wobei an der dem selbstschneidenden axialen Schaftabschnitt (18) zugewandten Seite des axialen Passungsabschnittes (21) des Schaftes (16) ein axialer Übergangsabschnitt (20) des Schaftes (16) vorgesehen ist, der sich in Gegenrichtung der Montagerichtung (15) des Verbindungselementes (14) stetig bis maximal auf den Durchmesser des axialen Passungsabschnittes (21) des Schaftes (16) erweitert,
**dadurch gekennzeichnet,**
• **dass** von dem selbstschneidenden axialen Schaftabschnitt (18) bis zu dem axialen Übergangsabschnitt (20) des Schaftes (16) ein gegenüber dem selbstschneidenden axialen Schaftabschnitt (18) durchmesserreduzierter axialer Zwischenabschnitt (19) des Schaftes (16) vorgesehen ist und
• **dass** sich der axiale Übergangsabschnitt (20) des Schaftes (16) stetig von einem Durchmesser, der wenigstens dem Durchmesser des durchmesserreduzierten Zwischenabschnittes (19) entspricht, bis maximal auf den Durchmesser des axialen Passungsabschnittes (21) des Schaftes (16) erweitert.

2. Verbindungselement nach Anspruch 1, **dadurch gekennzeichnet, dass** der axiale Passungsabschnitt (21) des Schaftes (16) glattwandig ausgebildet ist.

3. Verbindungselement nach einem der vorhergehenden Ansprüche, **dadurch gekennzeichnet, dass** an der von dem axialen Passungsabschnitt (21) des Schaftes (16) abgewandten Seite des axialen Gewindeabschnittes (22) des Schaftes (16) eine Auflage, vorzugsweise ein Kopf (24), des Verbindungselementes (14) vorgesehen ist, welche bzw. welcher den axialen Gewindeabschnitt (22) des Schaftes (16) in radialer Richtung der Schaftachse (17) überragt.

## Claims

1. Connection element for fitting a fitting member (11) to a leaf or a frame (2) of a window (1), door or the like, which has a shaft (16) having a shaft axis (17) and which, by the shaft (16) being rotated about the shaft axis (17), can be moved in an assembly direction (15) which extends in the longitudinal direction of the shaft axis (17) from a non-operating position into an assembly position,
• the shaft (16) having at the side located in the assembly direction (15) a self-cutting axial shaft portion (18) which is followed in a direction counter to the assembly direction (15) by an axial fitting portion (21) of the shaft (16) which itself has a diameter which corresponds to the diameter of the self-cutting axial shaft portion (18) or is larger than this diameter,
• there being provided at the side of the axial fitting portion (21) of the shaft (16) remote from the self-cutting axial shaft portion (18) an axial threaded portion (22) of the shaft (16), which portion has an outer thread (23) whose outer thread diameter is greater than the diameter of the axial fitting portion (21) of the shaft (16), and
• there being provided at the side of the axial fitting portion (21) of the shaft (16) facing the self-cutting axial shaft portion (18) an axial transition portion (20) of the shaft (16), which portion expands continuously in a direction counter to the assembly direction (15) of the connection element (14) up to a maximum of the diameter of the axial fitting portion (21) of the shaft (16),
**characterised in that**
• an axial intermediate portion (19) of the shaft (16), which portion is reduced in terms of diameter compared with the self-cutting axial shaft portion (18), is provided from the self-cutting axial shaft portion (18) as far as the axial transition portion (20) of the shaft (16) and
• **in that** the axial transition portion (20) of the shaft (16) expands continuously from a diameter which corresponds at least to the diameter of the intermediate portion (19) which is reduced in terms of diameter up to a maximum of the diameter of the axial fitting portion (21) of the shaft (16).

2. Connection element according to claim 1, **characterised in that** the axial fitting portion (21) of the shaft (16) has a smooth wall.

3. Connection element according to either of the preceding claims, **characterised in that**, at the side of the axial threaded portion (22) of the shaft (16), which side is remote from the axial fitting portion (21) of the shaft (16), a support, preferably a head (24), of the connection element (14) is provided and protrudes above the axial threaded portion (22) of the shaft (16) in the radial direction of the shaft axis (17).

## Revendications

1. Elément d'assemblage pour l'installation d'une ferrure (11) sur un battant ou sur un cadre dormant (2) d'une fenêtre (1), d'une porte ou analogues, lequel élément présente une tige (16) avec un axe de tige (17) et peut, par rotation de la tige (16) autour de l'axe de tige (17), être déplacé dans une direction de montage (15) s'étendant dans la direction longitudinale de l'axe de tige (17) d'une position de non-fonctionnement dans une position de montage,
- sachant que la tige (16) présente, sur le côté situé dans la direction de montage (15), un tronçon axial de tige autotaraudeur (18) qui est suivi, en direction opposée à la direction de montage (15), par un tronçon axial d'ajustement (21) de la tige (16) qui possède lui-même un diamètre qui est égal ou supérieur au diamètre du tronçon axial de tige autotaraudeur (18),
- sachant qu'il est prévu, sur le côté du tronçon axial d'ajustement (21) de la tige (16) qui est éloigné du tronçon axial de tige autotaraudeur (18), un tronçon axial fileté (22) de la tige (16) qui présente un filetage extérieur (23) dont le diamètre extérieur de filetage est supérieur au diamètre du tronçon axial d'ajustement (21) de la tige (16),
- et sachant qu'il est prévu, sur le côté du tronçon axial d'ajustement (21) de la tige (16) qui est tourné vers le tronçon axial de tige autotaraudeur (18), un tronçon axial de transition (20) de la tige (16) qui, en direction opposée à la direction de montage (15) de l'élément d'assemblage (14), s'élargit continûment jusqu'au maximum au diamètre du tronçon axial d'ajustement (21) de la tige (16),
**caractérisé**
- **en ce qu'**il est prévu, entre le tronçon axial de tige autotaraudeur (18) et le tronçon axial de transition (20) de la tige (16), un tronçon axial intermédiaire (19) de la tige (16) de diamètre réduit par rapport au tronçon axial de tige autotaraudeur (18),
- et **en ce que** le tronçon axial de transition (20) de la tige (16) s'élargit continûment, jusqu'au maximum au diamètre du tronçon axial d'ajustement (21) de la tige (16), depuis un diamètre qui correspond au moins au diamètre du tronçon intermédiaire (19) de diamètre réduit.

2. Elément d'assemblage selon la revendication 1, **caractérisé en ce que** le tronçon axial d'ajustement (21) de la tige (16) est réalisé à paroi lisse.

3. Elément d'assemblage selon l'une des revendications précédentes, **caractérisé en ce qu'**il est prévu, sur le côté du tronçon axial fileté (22) de la tige (16) qui est éloigné du tronçon axial d'ajustement (21) de la tige (16), un élément d'appui, de préférence une tête (24), de l'élément d'assemblage (14) qui dépasse du tronçon axial fileté (22) de la tige (16) en direction radiale à l'axe de tige (17).
